# EUROPÄISCHE PATENTANMELDUNG

(11) **EP 3 205 243 A1**
(43) Veröffentlichungstag der Anmeldung: **16.08.2017**
(21) Anmeldenummer: 17155657.4
(22) Anmeldetag: 10.02.2017
(51) Int. Cl.: A47J 19/06

(54) **LEBENSMITTELPRESSE**

(30) Priorität: 12.02.2016 DE 202016100738 U
(71) Anmelder: Fackelmann GmbH + Co KG, 91217 Hersbruck (DE)
(72) Erfinder: ELLERSTORFER, Thomas, 93413 Cham (DE)
(74) Vertreter: Rau, Schneck & Hübner Patentanwälte Rechtsanwälte PartGmbB

(57) **Zusammenfassung**

Die Erfindung betrifft eine Lebensmittelpresse, insbesondere Knoblauchpresse, mit einem Grundkörper (1) und einem Durchpresselement (4) zur Anordnung an dem Grundkörper (1), wobei das Durchpresselement (4) in montiertem Zustand einen Lebensmittel-Pressraum (26) zur Aufnahme eines zu pressenden Lebensmittels begrenzt und mindestens eine Lebensmittel-Durchpressöffnung (24) aufweist. Ferner hat die Lebensmittelpresse ein eine Lebensmittel-Pressfläche (18) aufweisendes Hebelelement (2) und eine eine Schwenkachse (21) vorgebende Schwenkeinrichtung (5), über die das Hebelelement (2) und der Grundkörper (1) in ihrem montierten Zustand von einer inaktiven Stellung in eine Pressstellung zum Pressen des zu pressenden Lebensmittels durch die mindestens eine Durchpressöffnung (24) verschwenkbar sind.

## Beschreibung

Die vorliegende Patentanmeldung nimmt die Priorität der deutschen Gebrauchsmusteranmeldung DE 20 2016 100 738.0 in Anspruch, deren Inhalt durch Bezugnahme hierin aufgenommen wird.

Die Erfindung betrifft eine Lebensmittelpresse, insbesondere Knoblauchpresse.

Lebensmittelpressen sind aus dem Stand der Technik durch offenkundige Vorbenutzung allgemein bekannt. Bei einer Knoblauchpresse handelt es sich bekanntlich um ein Küchengerät zum Durchpressen von Knoblauchzehen. Im Allgemeinen werden dabei die Knoblauchzehen durch kleine Löcher bzw. ein Sieb der Knoblauchpresse getrieben. Nachteilig bei den bekannten Lebensmittelpressen ist, dass deren Reinigung nach ihrem Einsatz oftmals äußerst aufwendig ist.

Der Erfindung liegt daher die Aufgabe zugrunde, eine Lebensmittelpresse bereitzustellen, die äußerst einfach reinigbar ist. Ferner soll die Lebensmittelpresse besonders kostengünstig herstellbar und funktionssicher sein.

Diese Aufgabe wird erfindungsgemäß durch die in dem Anspruch 1 angegebenen Merkmale gelöst.

Durch manuelle Überführung des Hebelelements und des Grundkörpers von einer inaktiven Stellung in eine Pressstellung wird das sich in dem Lebensmittel-Pressraum befindliche, zu pressende Lebensmittel durch die mindestens eine Durchpressöffnung bzw. das Durchpresselement getrieben, wodurch das Lebensmittel gepresst wird. Dabei greift günstigerweise die mindestens eine Lebensmittel-Pressfläche direkt an dem zu pressenden Lebensmittel an. Bei umgekehrter Verschwenkung wird der Lebensmittel-Pressraum wieder vergrößert. Das Hebelelement und der Grundkörper sind so zwischen einer inaktiven Endstellung und einer Press-Endstellung relativ zueinander verschwenkbar. Der Grundkörper und das Hebelelement bilden vorzugsweise zusammen eine Hebelanordnung.

Die Lebensmittelpresse ist von dem Hebeltyp. Sie ist günstigerweise mechanisch ausgeführt.

Es ist von Vorteil, wenn die Lebensmittelpresse bezüglich einer Symmetrieebene symmetrisch ist.

Die Lebensmittel-Pressfläche bildet so vorzugsweise eine Stempel-Pressfläche bzw. Kolben-Pressfläche. Die Lebensmittel-Pressfläche ist vorzugsweise eben. Sie entspricht günstigerweise im Wesentlichen der Querschnittsfläche des Lebensmittel-Pressraums.

Es ist von Vorteil, wenn das Hebelelement einen Griffbereich zum Greifen desselben aufweist. Das Hebelelement ist vorzugsweise aus Kunststoff gebildet. Alternativ ist es metallisch. Das Hebelelement ist vorzugsweise einstückig.

Günstigerweise ist der Grundkörper als Gegenhebel bzw. zweites Hebelelement ausgeführt. Er hat vorzugsweise einen Griffbereich zum Greifen desselben. Der Grundkörper ist vorzugsweise aus Kunststoff gebildet. Alternativ ist er metallisch.

Die mindestens eine Durchpressöffnung ist derart dimensioniert, dass das zu pressende Lebensmittel durch diese treibbar ist und dabei mittels dem Durchpresselement gepresst wird. Sie hat vorzugsweise eine Querabmessung zwischen 1 mm und 5 mm, bevorzugter zwischen 2 mm und 4 mm. Das Durchpresselement ist günstigerweise siebartig ausgeführt. Das Durchpresselement hat vorzugsweise mehrere, bevorzugter eine Vielzahl von, Durchpressöffnungen. Beispielsweise sind zwischen 20 und 100 Durchpressöffnungen vorhanden.

Das Durchpresselement ist vorzugsweise eben. Es ist vorzugsweise aus einem anderen Material als der Grundkörper und/oder das Hebelelement gebildet. Das Durchpresselement besteht vorzugsweise aus Metall, alternativ aus Kunststoff.

Über die Schwenkeinrichtung ist eine geführte Verschwenkung des Hebelelements und des Grundkörpers relativ zueinander möglich. Die Schwenkeinrichtung hat vorzugsweise ein Hebelgelenk.

Es ist von Vorteil, wenn der Grundkörper, das Hebelelement und/oder das Durchpresselement spülmaschinengeeignet sind.

Weitere vorteilhafte Ausgestaltungen sind in den Unteransprüchen angegeben.

Die Lebensmittelpresse gemäß dem Unteranspruch 2 ist demontierbar, was so eine besonders einfache und gründliche Reinigung ermöglicht. Dies ist günstigerweise werkzeuglos, also ohne Hilfsmittel bzw. Werkzeug, möglich.

Die Lebensmittelpresse gemäß dem Unteranspruch 3 ist äußerst einfach wieder zusammenbaubar, was besonders benutzerfreundlich ist. Dies ist insbesondere werkzeuglos, also ohne Hilfsmittel bzw. Werkzeug, möglich.

Gemäß dem Unteranspruch 4 schließt sich unmittelbar an das Durchpresselement eine Lebensmittel-Pressraum-Begrenzungswand an. Die Lebensmittel-Pressraum-Begrenzungswand ist vorzugsweise eben. Es ist von Vorteil, wenn zwischen dem Durchpresselement und der Lebensmittel-Pressraum-Begrenzungswand ein Winkel zwischen 60° und 120° liegt, bevorzugter 90°, beträgt.

Gemäß dem Unteranspruch 5 schließt sich unmittelbar an die Lebensmittel-Pressraum-Begrenzungswand ein Halteteil an. Vorzugsweise ist das Halteteil länglich. Es ist insbesondere eben. Es ist von Vorteil, wenn zwischen der Lebensmittel-Pressraum-Begrenzungswand und dem Halteteil ein Winkel vorliegt, der zwischen 60° und 120°, bevorzugter 90°, ist.

Die Ausgestaltung gemäß dem Unteranspruch 6 führt zu einer Lebensmittelpresse, die besonders wenige Komponenten aufweist und so besonders montagefreundlich ist. Die Lebensmittelpresse hat so insbesondere nur drei Komponenten, nämlich den Grundkörper, das Hebelelement und die Einsatzanordnung.

Die Einsatzanordnung ist günstigerweise an dem Grundkörper, insbesondere formschlüssig, örtlich festlegbar. Dies kann beispielsweise durch eine Steck-, Rast-, Schnappverbindung, eine Kombination derselben oder dergleichen erfolgen.

Die Lebensmittelpresse gemäß dem Unteranspruch 7 ist wieder äußerst einfach zerlegbar, was eine besonders einfache bzw. gründliche Reinigung ermöglicht. Dies ist insbesondere werkzeuglos, also ohne Hilfsmittel bzw. Werkzeug, möglich.

Die Lebensmittelpresse gemäß dem Unteranspruch 8 ist wieder äußerst einfach zusammenbaubar, was besonders benutzerfreundlich ist. Dies ist insbesondere werkzeuglos, also ohne Werkzeug bzw. Hilfsmittel, möglich.

Das mindestens eine erste Schwenkmittel gemäß dem Unteranspruch 9 ist beispielsweise als Lageröffnung, Schwenkzapfen oder dergleichen ausgeführt.

Das mindestens eine zweite Schwenkmittel gemäß dem Unteranspruch 10 ist günstigerweise im Wesentlichen komplementär zu dem mindestens einen ersten Schwenkmittel ausgebildet. Es ist vorzugsweise als Schwenkzapfen, Schwenkstift, Lageröffnung oder dergleichen ausgebildet.

Es ist von Vorteil, wenn das mindestens eine erste Schwenkmittel und das mindestens zweite Schwenkmittel in montiertem Zustand des Grundkörpers und des Hebelelements in Schwenk- bzw. Gelenkverbindung miteinander stehen.

Gemäß dem Unteranspruch 11 stehen das mindestens eine erste und zweite Schwenkmittel in montiertem Zustand des Grundkörpers und des Hebelelements in, insbesondere werkzeugloser, lösbarer Schwenkverbindung miteinander. Die Verbindung zwischen den Schwenkmitteln ist so bevorzugt also ohne Hilfsmittel bzw. werkzeuglos lösbar.

Die Lageröffnung gemäß dem Unteranspruch 12 ist vorzugsweise im Querschnitt kreisförmig bzw. teilkreisförmig.

Gemäß dem Unteranspruch 13 ist die Lageröffnung unter Bildung einer Montage-/Demontageöffnung für das andere Schwenkmittel teilweise umfangsseitig offen. Das andere Schwenkmittel ist dann günstigerweise über die Montage-/Demontageöffnung in die Lageröffnung einführbar bzw. aus dieser herausführbar, was besonders montage- bzw. demontagefreundlich ist. Eine unbeabsichtigte Trennung des Hebelelements von dem Grundkörper ist bevorzugt funktionssicher vermeidbar.

Gemäß dem Unteranspruch 14 ist die Lageröffnung über einen Winkelbereich von mehr als 180°, bevorzugter mehr als 185°, umfangsseitig geschlossen. Die Montage-/Demontageöffnung erstreckt sich umfangsseitig günstigerweise über einen Winkelbereich von mindestens 90° entlang der Lageröffnung bezogen auf deren Mittelachse.

Der Schwenkzapfen gemäß dem Unteranspruch 15 ist günstigerweise im Wesentlichen zylindrisch. Vorzugsweise hat jeder Schwenkzapfen mindestens eine umfangsseitige Montage-/Demontageabflachung. Wenn jeder Schwenkzapfen zwei Montage-/Demontageabflachungen hat, so liegen diese vorzugsweise einander gegenüber.

Nachfolgend wird unter Bezugnahme auf die beigefügte Zeichnung eine bevorzugte Ausführungsform der Erfindung beispielshaft beschrieben. Dabei zeigen:
- Fig. 1: eine perspektivische Ansicht einer erfindungsgemäßen, montierten Lebensmittelpresse in ihrer inaktiven Stellung,
- Fig. 2: die in Fig. 1 gezeigte Lebensmittelpresse in ihrer Press-Endstellung,
- Fig. 3: eine Explosionsansicht der in Fig. 1 bzw. 2 gezeigten Lebensmittelpresse, und
- Fig. 4: eine Schnittansicht der in den Fig. 1 bis 3 veranschaulichten Lebensmittelpresse in ihrer Press-Endstellung.

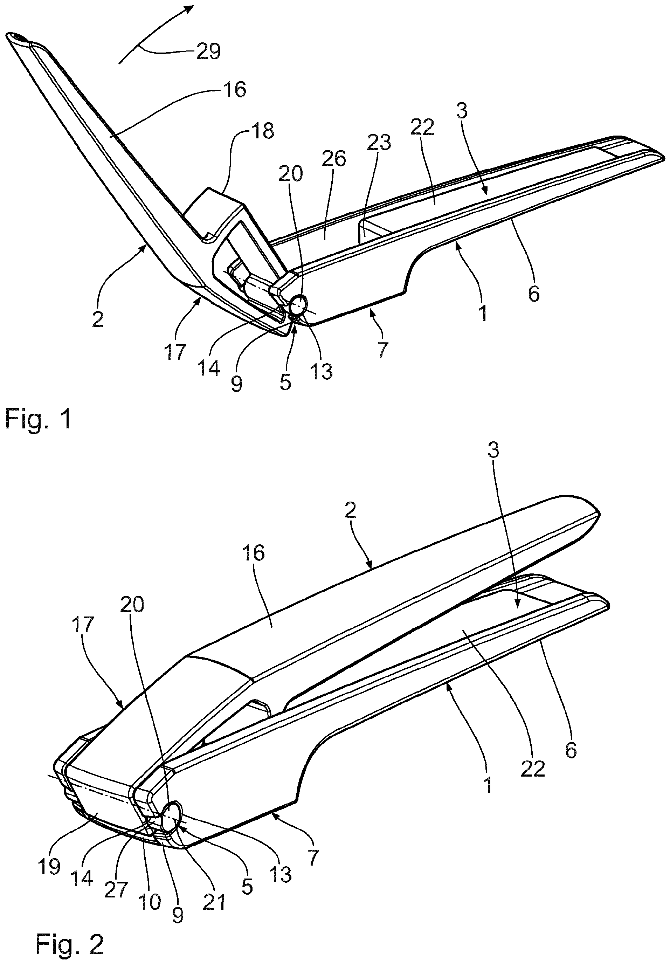

Eine in den Fig. 1 bis 4 dargestellte Lebensmittelpresse dient insbesondere zum Pressen von Knoblauch bzw. Knoblauchzehen (nicht dargestellt) und wird daher nachfolgend als Knoblauchpresse bezeichnet. Andere Lebensmittel sind alternativ pressbar.

Die Knoblauchpresse umfasst einen Grundkörper 1, ein mit dem Grundkörper 1 in Schwenkverbindung stehendes Hebelelement 2 und eine in den Grundkörper 1 einsetzbare Einsatzanordnung 3 mit einem Durchpresselement 4. Für eine gelenkige Verbindung zwischen dem Grundkörper 1 und dem Hebelelement 2 hat die Knoblauchpresse eine Schwenkeinrichtung 5.

Der Grundkörper 1 ist einstückig ausgeführt. Er ist vorzugsweise ein Kunststoffteil. Der Grundkörper 1 hat einen hinteren Griffbereich 6 zum Greifen bzw. Halten des Grundkörpers 1. Ferner weist der Grundkörper 1 ein sich an den Griffbereich 6 vorne anschließendes Hauptteil 7 auf. Das Hauptteil 7 hat zwei einander gegenüberliegende Seitenwände 8, die parallel und beabstandet zueinander verlaufen. In einem dem Griffbereich 6 abwandten vorderen Endbereich 9 des Hauptteils 7 hat das Hauptteil 7 einen Verbindungsträger 10, der sich unten zwischen den Seitenwänden 8 erstreckt. Benachbart zu dem Griffbereich 6 hat das Hauptteil 7 eine Rückwand 11.

Durch den Verbindungsträger 10, die Rückwand 11 und die Seitenwände 8 ist in dem Hauptteil 7 eine untere Durchtrittsöffnung 12 begrenzt, die rechteckig ist. Die Durchtrittsöffnung 12 ist gegenüber dem Griffbereich 6 nach unten versetzt. Sie erstrecken sich im Wesentlichen parallel zueinander.

Benachbart zu dem Verbindungsträger 10 ist in jeder Seitenwand 8 in dem Endbereich 9 eine Lageröffnung 13 gebildet. Jede Lageröffnung 13 durchdringt die jeweilige Seitenwand 8 vollständig. Die Lageröffnungen 13 sind unter Bildung einer jeweiligen Montage-/Demontageöffnung 14 in dem Endbereich 9 bzw. nach vorne offen. Jede Lageröffnung 13 ist so durch eine Lagerwand 15 des Grundkörpers 1 räumlich begrenzt, die sich kreisbogenförmig erstreckt. Die Montage-/Demontageöffnungen 14 schließen sich unmittelbar vorne an die jeweilige Lageröffnung 13 an, sodass zwischen diesen eine Verbindung besteht. Die Montage-/Demontageöffnungen 14 haben jeweils eine Öffnungsweite, die kleiner als der eigentliche Durchmesser der jeweiligen Lageröffnung 13 ist.

Das Hebelelement 2 hat einen hinteren Griffbereich 16 zum Greifen desselben. Ferner hat das Hebelelement 2 einen vorderen Arbeitskörper 17 mit einer ebenen Pressfläche 18.

In einem dem Griffbereich 16 abgewandten vorderen Endbereich 19 des Hebelelements 2 trägt der Arbeitskörper 17 seitlich zwei Schwenkzapfen 20, die im Wesentlichen zylinderförmig sind und miteinander fluchten. Die Schwenkzapfen 20 sind benachbart zu der Pressfläche 18 angeordnet. Jeder Schwenkzapfen 20 hat vorzugsweise mindestens eine umfangsseitige Montage-/Demontageabflachung 27, sodass der Schwenkzapfen 20 dort eine reduzierte Querabmessung bzw. einen reduzierten Durchmesser hat. Die Schwenkzapfen 20 sind integraler Bestandteil des Hebelelements 2.

Jeder Schwenkzapfen 20 ist in einer zugehörigen Lageröffnung 13 aufnehmbar. Die Schwenkzapfen 20 und die Lageröffnungen 13 bilden zusammen die Schwenkeinrichtung 5. Die Lageröffnungen 13 geben eine Schwenkachse 21 vor.

Die Einsatzanordnung 3 hat ein Halteteil 22, eine sich an das Halteteil 22 anschließende Pressraum-Begrenzungswand 23 und das Durchpresselement 4, das sich an die Pressraum-Begrenzungswand 23 anschließt. Das Halteteil 22 und das Durchpresselement 4 verlaufen parallel, aber unter Bildung der Pressraum-Begrenzungswand 23 versetzt zueinander.

Das Halteteil 22 ist leistenartig ausgeführt. Die Pressraum-Begrenzungswand 23 ist plattenartig. Das Durchpresselement 4 ist siebartig. Es hat eine Vielzahl durchgängiger Durchpressöffnungen 24, die nebeneinander angeordnet sind.

Nachfolgend wird die Montage der Knoblauchpresse beschrieben. Zunächst wird die Einsatzanordnung 3 in den Grundkörper 1 händisch eingesetzt. Die Einsatzanordnung 3 kann dabei an dem Halteteil 22 gehalten werden. In eingesetztem Zustand ist das Halteteil 22 in dem Griffbereich 6 aufgenommen. Die Einsatzanordnung 3 ist günstigerweise über das Halteteil 22 in dem Grundkörper 1 gehalten. Das Durchpresselement 4 ist benachbart zu der Durchtrittsöffnung 12 angeordnet und erstreckt sich über diese. Das Durchpresselement 4 liegt oben auf dem Verbindungsträger 10 und einem unteren Haltevorsprung 25 der Rückwand 11 auf. Zum weiteren Unterstützen des Durchpresselements 4 können innen an den Seitenwänden 8 entsprechende Halteelemente (nicht dargestellt) vorgesehen sein. Die Pressraum-Begrenzungswand 23 verläuft benachbart zu der Rückwand 11 des Grundkörpers 1.

Durch die Seitenwände 8 und die Pressraum-Begrenzungswand 23 und das Durchpresselement 4 ist ein Pressraum 26 räumlich begrenzt, der gegenüberliegend zu dem Durchpresselement 4 zunächst offen ist.

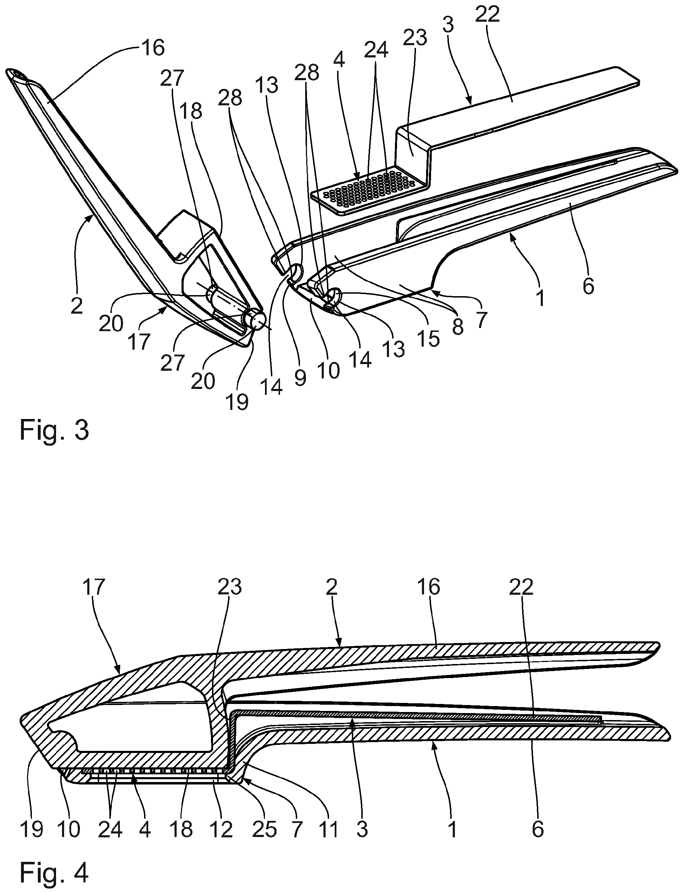

Anschließend wird das Hebelelement 2 in Gelenk- bzw. Schwenkverbindung mit dem Grundkörper 1 gebracht. Dazu werden die Schwenkzapfen 20 über die Montage-/Demontageöffnungen 14 in die jeweilige Lageröffnung 13 eingeführt. Die Montage-/Demontageabflachungen 27 sind dabei die Montage-/Demontageöffnungen 14 begrenzenden Rückhaltewänden 28 des Grundkörpers 1 zugewandt, sodass die Schwenkzapfen 20 die Montage-/Demontageöffnungen 14 passieren können. Das Hebelelement 2 befindet sich dabei quasi in einer gegenüber dem Grundkörper 1 ausgelenkten Stellung, wie sie in Fig. 3 dargestellt ist. Die Schwenkzapfen 20 haben in Einführrichtung ihre minimale Querabmessung.

Wenn sich die Schwenkzapfen 20 in den Lageröffnungen 13 befinden, ist die Knoblauchpresse quasi funktionsfähig. Die Schwenkzapfen 20 liegen zumindest bereichsweise innen an den Lagerwänden 15 an. Dieser Zustand ist in Fig. 1 gezeigt.

Beim Verschwenken des Hebelelements 2 um die Schwenkachse 21 entlang einer Schwenkrichtung 29 in Richtung auf den Griffbereich 6 wird durch die Pressfläche 18 der Pressraum 26 kontinuierlich verkleinert. Die dazu notwendige Kraft kann auf den Griffbereich 6 und/oder 16 ausgeübt werden.

Zum einen werden dadurch die Montage-/Demontageabflachungen 27 gegenüber den Lageröffnungen 13 verschwenkt, sodass so ein ungewollter Austritt der Schwenkzapfen 20 aus den Lageröffnungen 13 unterbunden wird.

Zum anderen werden in dem Pressraum 26 befindliche Knoblauchzehen mittels der Pressfläche 18 durch das Durchpresselement 4 gepresst. Dabei werden die Knoblauchzehen in gepresster Form durch die Durchpressöffnungen 24 und die Durchtrittsöffnung 12 getrieben.

In der Press-Endstellung, die in Fig. 2 und 4 gezeigt ist, sind die Griffbereiche 6, 16 benachbart zueinander angeordnet. Die Pressfläche 18 liegt flächig oben auf dem Durchpresselement 4 an. Die Pressfläche 18 erstreckt sich im Wesentlichen bis zu der Pressraum-Begrenzungswand 23.

Alternativ wird zunächst das Hebelelement 2 mit dem Grundkörper 1 in Schwenkverbindung gebracht und erst danach die Einsatzanordnung 3 in den Grundkörper 1 eingesetzt.

Zur Demontage wird das Hebelelement 2 entgegen der Schwenkrichtung 29 wieder in eine inaktive EndStellung gebracht. Dabei vergrößert sich der Pressraum 26 wieder. Die Demontage erfolgt umgekehrt wie die Montage.

## Patentansprüche

1. Lebensmittelpresse, insbesondere Knoblauchpresse,
a) mit einem Grundkörper (1),
b) mit einem Durchpresselement (4) zur Anordnung an dem Grundkörper (1), wobei das Durchpresselement (4)
i) in montiertem Zustand einen Lebensmittel-Pressraum (26) zur Aufnahme eines zu pressenden Lebensmittels begrenzt, und
ii) mindestens eine Lebensmittel-Durchpressöffnung (24) aufweist,
c) mit einem eine Lebensmittel-Pressfläche (18) aufweisenden Hebelelement (2), und
d) mit einer eine Schwenkachse (21) vorgebenden Schwenkeinrichtung (5), über die das Hebelelement (2) und der Grundkörper (1) in ihrem montierten Zustand von einer inaktiven Stellung in eine Pressstellung zum Pressen des zu pressenden Lebensmittels durch die mindestens eine Durchpressöffnung (24) verschwenkbar sind.

2. Lebensmittelpresse nach Anspruch 1, **dadurch gekennzeichnet, dass** das Durchpresselement (4) von dem Grundkörper (1), insbesondere werkzeuglos, entfernbar ist.

3. Lebensmittelpresse nach Anspruch 1 oder 2, **dadurch gekennzeichnet, dass** das Durchpresselement (4) an dem Grundkörper (1), insbesondere werkzeuglos, lösbar örtlich festlegbar ist.

4. Lebensmittelpresse nach einem der vorherigen Ansprüche, **dadurch gekennzeichnet, dass** sich unmittelbar an das Durchpresselement (4) eine Lebensmittel-Pressraum-Begrenzungswand (23) anschließt.

5. Lebensmittelpresse nach Anspruch 4, **dadurch gekennzeichnet, dass** sich unmittelbar an die Lebensmittel-Pressraum-Begrenzungswand (23) ein Halteteil (22) anschließt.

6. Lebensmittelpresse nach Anspruch 4 und 5, **dadurch gekennzeichnet, dass** das Durchpresselement (4), die Lebensmittel-Pressraum-Begrenzungswand (23) und das Halteteil (22), insbesondere unter Bildung einer Einsatzteilanordnung (3), einstückig miteinander verbunden sind.

7. Lebensmittelpresse nach einem der vorherigen Ansprüche, **dadurch gekennzeichnet, dass** der Grundkörper (1) und das Hebelelement (2), insbesondere werkzeuglos, voneinander trennbar sind.

8. Lebensmittelpresse nach einem der vorherigen Ansprüche, **dadurch gekennzeichnet, dass** das Hebelelement (2), insbesondere werkzeuglos, lösbar an dem Grundkörper (1) anordenbar ist.

9. Lebensmittelpresse nach einem der vorherigen Ansprüche, **dadurch gekennzeichnet, dass** die Schwenkeinrichtung (5) mindestens ein an dem Grundkörper (1) angeordnetes erstes Schwenkmittel (20) aufweist.

10. Lebensmittelpresse nach einem der vorherigen Ansprüche, **dadurch gekennzeichnet, dass** die Schwenkeinrichtung (5) mindestens ein an dem Hebelelement (2) angeordnetes zweites Schwenkmittel (13) aufweist.

11. Lebensmittelpresse nach Anspruch 9 und 10, **dadurch gekennzeichnet, dass** das mindestens eine erste und zweite Schwenkmittel (13, 20) in montiertem Zustand des Grundkörpers (1) und des Hebelelements (2) in lösbarer Schwenkverbindung miteinander stehen.

12. Lebensmittelpresse nach einem der Ansprüche 9 bis 11, **dadurch gekennzeichnet, dass** das mindestens eine erste oder zweite Schwenkmittel (13, 20) als Lageröffnung ausgebildet ist.

13. Lebensmittelpresse nach Anspruch 12, **dadurch gekennzeichnet, dass** die Lageröffnung (13) unter Bildung einer Montage-/Demontage-öffnung (14) für das andere Schwenkmittel (20) teilweise umfangsseitig offen ist.

14. Lebensmittelpresse nach Anspruch 12 oder 13, **dadurch gekennzeichnet, dass** die Lageröffnung (13) über einen Winkelbereich von mehr als 180°, bevorzugter mehr als 185°, umfangsseitig geschlossen ist.

15. Lebensmittelpresse nach einem der Ansprüche 12 bis 14, **dadurch gekennzeichnet, dass** das andere Schwenkmittel (20) als Schwenkzapfen ausgebildet ist und günstigerweise mindestens eine Montage-/Demontageabflachung (27) aufweist.
